(19) Europäisches Patentamt
European Patent Office
Office européen des brevets

(11) **EP 3 001 094 A1**

(12) **EUROPEAN PATENT APPLICATION**
published in accordance with Art. 153(4) EPC

(43) Date of publication:
**30.03.2016 Bulletin 2016/13**

(51) Int Cl.:
**F21S 2/00** (2016.01)  **F21Y 101/00** (2016.01)

(21) Application number: **14795224.6**

(86) International application number:
**PCT/JP2014/062467**

(22) Date of filing: **09.05.2014**

(87) International publication number:
**WO 2014/181865 (13.11.2014 Gazette 2014/46)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **10.05.2013 JP 2013100025**

(71) Applicant: **Kuraray Co., Ltd.**
**Kurashiki-shi, Okayama 710-0801 (JP)**

(72) Inventor: **KINOSHITA, Seiji**
**Tsukuba-shi**
**Ibaraki 305-0841 (JP)**

(74) Representative: **Pfenning, Meinig & Partner mbB**
**Patent- und Rechtsanwälte**
**Joachimsthaler Straße 12**
**10719 Berlin (DE)**

(54) **LIGHTING DEVICE**

(57)    To provide an illumination device of an edge light type that has an anisotropic luminous intensity distribution of light and is able to emit light with high luminous intensity.

The illumination device (1) of the edge light type includes a light emitting unit (3) provided at one side surface of a light guide plate (2). The light guide plate (2) has a plurality of recesses (6) having a V-shaped cross-section and provided on a bottom surface (2b) in parallel to an X-axis direction at a predetermined pitch and a plurality of protrusions (7) having a lenticular lens shape in the cross-sectional view and provided in parallel to a Y-axis direction at a prearranged pitch. A vertex angle of each of the recesses (6) is defined to reflect the light incident into the light guide plate (2) through an incident end surface (2a) by an inclined surface on the recesses (6) of the bottom surface (2b) such that emission light emitted from an emission surface (2c) has a maximum luminous intensity at an angle between 25 degree to 65 degree with respect to the Z-axis direction.

FIG.1

EP 3 001 094 A1

**Description**

TECHNICAL FIELD

The present invention relates to an edge light type illumination device that causes light emitted from a primary light source such as an LED disposed on one side surface of a light guide plate to be incident into the light guide plate and causes the light to be emitted from one primary surface (an emission surface) of the light guide plate, and particularly, to an edge light type illumination device suitable for an lighting fixture or an exhibition lighting fixture attached to a ceiling surface or a wall surface of an office or a dwelling house.

BACKGROUND ART

An edge light type backlight unit is mainly used in a liquid crystal display in a LCD TV or a PC. In the edge light type backlight unit, light emitted from a primary light source (an LED) disposed on at least one side surface of a light guide plate is incident into the light guide plate and is emitted from one entire primary surface (an emission surface) of the light guide plate so that the light is emitted as plane light.

For this reason, since the edge light type backlight unit is easily provided in a thin and light state, the edge light type backlight unit is applied to an lighting fixture attached to a ceiling surface of an office or a dwelling house (for example, Patent Literature 1).

Particularly, an LED can improve lighting efficiency, decrease cost, and make an atmosphere according to a living pattern using the illumination function of the LED. Hence, a lighting fixture using an LED as a light source is widely distributed (for example, Patent Literature 2).

For a plane light source device used in a liquid crystal display, it is important to keep the uniform brightness in the light emitting surface. However, for the illumination device, it is important to keep the illuminance uniformity on the target illumination surface. Therefore, the technique used in the plane light source cannot be directly applied to the illumination device. Accordingly, the illumination device needs to be designed in a design different from the plane light source device.

CITATION LIST

Patent Literature

Patent Literature 1: JP H03-81907 A
Patent Literature 2: JP 2013-30279 A

SUMMARY

Technical Problem

When the edge light type illumination device of Patent Literatures 1 or 2 is used as the lighting fixture attached to the ceiling surface of the office or the dwelling house, the light device emits plane light from the primary surface (the emission surface) of, for example, the square light guide plate so as to uniformly illuminate a place directly below and its vicinity of the illumination device.

Incidentally, in the edge light type illumination device of Patent Literatures 1 or 2, the plane light emitted from the primary surface (the emission surface) of the light guide plate is widely adjusted in an isotropic state. Accordingly, it is not possible to handle a case in which an anisotropic luminous intensity distribution needs to be set in accordance with the illumination application. For example, in a department store, merchandizes such as shoes or bags are arranged in stepwise in the height direction. In order to illuminate these articles to get attention over other articles, it is desirable to obliquely illuminate the merchandizes. For this reason, a plurality of spotlights is used. However, to use the plurality of spotlights, a distance between shelves needs to be widely ensured, thus the number of displayed merchandizes is limited.

Further, a modification to brightly illuminate the wall surface with the illumination device has been examined in order to brightly illuminate a space of the office or the dwelling house. The illumination device also uses a spotlight which is attached to a ceiling so as to protrude therefrom or is buried therein, but there is a demerit that the appearance is poor and the installation cost increases.

An object of the invention is, therefore, to provide a thin and light edge light type illumination device that has an anisotropic luminous intensity distribution of light emitted from an illumination device and is able to emit light with high luminous intensity.

Solution to Problem

In order to achieve the above object, the illumination device according to claim 1 includes a primary light source provided at one side surface of a light guide plate, and the light guide plate includes an emission surface, a bottom surface facing the emission surface, and an incident end surface configured to receive light emitted from the primary light source. The primary light source is disposed in parallel to an X-axis, the light guide plate is disposed in parallel to an X-Y plane, and the incident end surface of the light guide plate is aligned in parallel to a Y-Z plane. The light guide plate includes a plurality of recess patterns provided on the bottom surface in parallel to the X-axis direction at a predetermined pitch and a plurality of protrusion patterns provided on the emission surface in parallel to the Y-axis direction at a prearranged pitch. Each of the recess patterns is defined to reflect the light incident into the light guide plate through the incident end surface by an inclined surface on the recess patterns of the bottom surface such that emission light emitted from the emission surface has a maximum luminous intensity at an angle between 25 degree to 65 degree with respect to a Z-axis direction.

In the illumination device according to claim 2, each of the recess patterns provided on the bottom surface of the light guide plate has a V-shaped cross-section of which a vertex angle is set to 120 degree to 165 degree.

In the illumination device according to claim 3, each of the protrusion pattern provided on the emission surface of the light guide plate has a lenticular lens shape, a trapezoid shape, or a parabolic curve shape in a cross-sectional view.

In the illumination device according to claim 4, the bottom surface of the light guide plate includes a reflection sheet that is configured to reflect light, and the emission surface of the light guide plate includes a diffusion sheet that is configured to uniformly diffuse light.

In the illumination device according to claim 5, the bottom surface of the light guide plate includes a reflection sheet that is configured to reflect light.

Advantageous Effects

According to the illumination device of the invention, the recess pattern is defined to reflect the light incident into the light guide plate through the incident end surface by the inclined surface on the recess pattern of the bottom surface such that the emission light emitted from the emission surface has a maximum luminous intensity at the angle between 25 degree to 65 degree with respect to the Z-axis direction. Therefore, it is possible to emit the light having an anisotropic luminous intensity distribution and high luminous intensity.

Accordingly, for example, when a plurality of merchandizes such as shoes or bags are arranged in stepwise in the height direction in a department store or the like, it is possible to illuminate these merchandizes from the oblique upper side by the light emitted from one illumination device such that the merchandizes get attention over the other articles without using a plurality of spotlights as in the related art.

Further, even when the spotlight is used in an office or a dwelling house, the illumination device of the present invention emitting light having an anisotropic luminous intensity distribution and high luminous intensity can be used instead of the spotlight. Hence, the illumination device can be easily attached to a ceiling surface or the like similarly to a general lighting fixture.

BRIEF DESCRIPTION OF DRAWINGS

[FIG. 1] FIG. 1 is an exploded perspective view illustrating an edge light type illumination device according to an embodiment of the preset invention.
[FIG. 2] FIG. 2 is a cross-sectional view taken along the line A-A of FIG. 1.
[FIG. 3] FIG. 3 is a schematic side view illustrating a short side of a light guide plate of the illumination device according to the embodiment.
[FIG. 4] FIG. 4 is a diagram showing a measurement result of a luminous intensity distribution of light emitted from an emission surface of the light guide plate when a vertex angle of a V-shaped recess provided on a bottom surface of the light guide plate of the illumination device according to the embodiment is changed.
[FIG. 5A] FIG. 5A is a diagram illustrating a bottom surface of the light guide plate of the illumination device according to the embodiment.
[FIG. 5B] FIG. 5B is a cross-sectional view taken along the line B-B of FIG. 5A.
[FIG. 6A] FIG. 6A is a diagram illustrating a side surface of the illumination device according to the embodiment.

[FIG. 6B] FIG. 6B is a diagram showing a measurement result of luminous intensity distribution of light emitted from an emission surface of the light guide plate.

[FIG. 7] FIG. 7 is a diagram showing a measurement result of a luminous intensity distribution light emitted from an emission surface of a light guide plate according to variations of the embodiment.

[FIG. 8A] FIG. 8A is a diagram illustrating a shape of a recess provided in a bottom surface of a light guide plate according to a first variation of the embodiment.

[FIG. 8B] FIG. 8B is a diagram illustrating a shape of a recess provided in a bottom surface of a light guide plate according to a second variation of the embodiment.

[FIG. 9] FIG. 9 is a diagram showing a measurement result of a luminous intensity distribution measurement result of light emitted from an emission surface of a light guide plate according to a second variation of the embodiment.

DESCRIPTION OF EMBODIMENTS

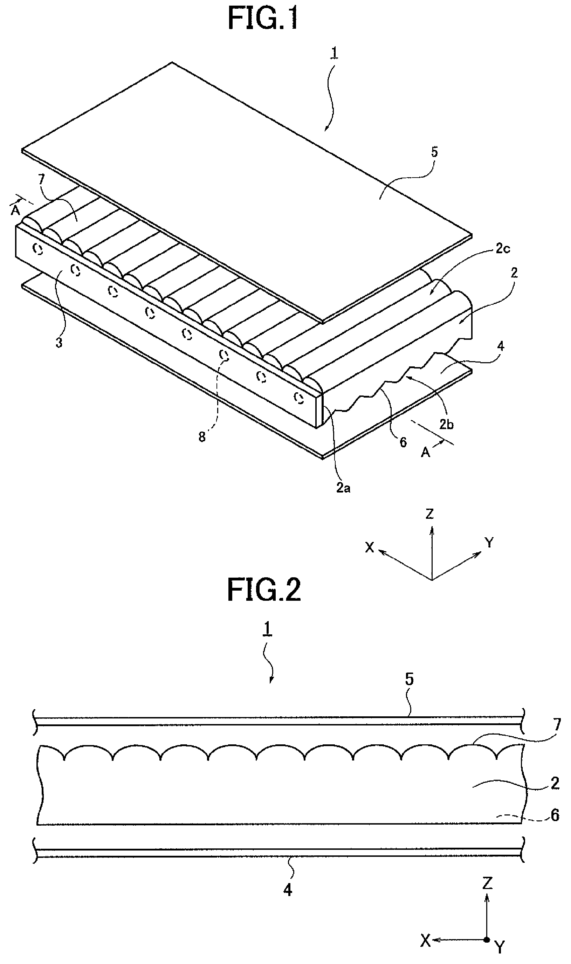

FIG. 1 is an exploded perspective view illustrating an edge light type illumination device according to an embodiment of the present invention, and FIG. 2 is a cross-sectional view taken along the line A-A of FIG. 1. In an edge light type illumination device 1 according to the embodiment, the normal line of the X-Y plane including the X axis and the Y axis orthogonal to the X axis is set as the Z axis, and the Z-axis direction is set as a light emitting direction.

As illustrated in FIGs. 1 and 2, the edge light type illumination device (hereinafter, simply referred to as a "illumination device") 1 according to the embodiment mainly includes a rectangular light guide plate 2 which is a transparent structure formed of transparent resin (for example, acrylic resin) or the like, a light emitting unit 3 disposed at one side surface (hereinafter, referred to as an "incident end surface") 2a of the light guide plate 2 in the left and right direction (the Y-axis direction), a reflection sheet 4 disposed on a rear surface (hereinafter, referred to as a "bottom surface") 2b of the light guide plate 2, and a diffusion sheet 5 provided on a front surface (hereinafter, referred to as an "emission surface") 2c of the light guide plate 2.

As illustrated in FIG. 1, the light guide plate 2 of the illumination device 1 is provided so that the long side is aligned in the X-axis direction and the light emitting unit 3 is disposed along one long side (in the X-axis direction). In addition, when the illumination device 1 is installed on a ceiling surface of an office or a dwelling house, the reflection sheet 4 is located on the ceiling surface, and anisotropic light to be described later is emitted obliquely downward from the emission surface 2c (the diffusion sheet 5).

The bottom surface 2b of the light guide plate 2 includes a plurality of recesses 6 provided at a predetermined pitch so as to extend in the X-axis direction (the long side direction). Further, the emission surface 2c of the light guide plate 2 includes a plurality of protrusion patterns 7 provided at a prearranged pitch so as to extend in the Y-axis direction (the short side direction). Note that the light guide plate 2 will be described in detail later.

The light emitting unit 3 as a primary light source is disposed on the incident end surface 2a of the light guide plate 2 in the X-axis direction. Inside the light emitting unit 3, a plurality of LEDs (Light Emitting Diodes) 8 as light sources is linearly disposed at a predetermined interval in the X-axis direction of the light guide plate 2. The arrangement interval of the LEDs 8 is, for example, about several mm to 20 mm.

The light emitted from the LEDs (the light sources) of the light emitting unit 3 enters into the light guide plate 2 in the Y-axis direction from the incident end surface 2a of the light guide plate 2.

The reflection sheet 4 is provided such that the light emitted outward from the incident end surface 2a through the bottom surface 2b of the light guide plate 2 is returned to the light guide plate 2. It is desirable to use the reflection sheet 4 having a high light utilization efficiency, i.e., having reflectivity of 95% or more. The material of the reflection sheet 4 may be a metal foil, e.g., aluminum, silver, or stainless steel; a white coating; or foam PET (polyethylene terephthalate) resin.

The diffusion sheet 5 provided on the emission surface 2c that is the front surface of the light guide plate 2 appropriately uniform the light emitted from the emission surface 2c of the light guide plate 2 so as to suppress non-uniform brightness. That is, the diffusion sheet 5 has a function of improving an appearance.

For the illumination device attached on a ceiling surface of an office or a dwelling house, the light emitting surface of the illumination device is visible. That is, the appearance thereof is very important. For this reason, plural diffusion sheets 5 may be used. The diffusion sheet 5 may be a plate-shaped material (for example, PMMA, PC, or the like) formed of resin having a diffusing property or may be a protection cover obtained by thermo-forming these plates in a three-dimensional shape.

Note that, the diffusion sheet 5 is not necessarily provided on the emission surface 2c of the light guide plate 2. The diffusion sheet 5 may not be provided depending on the installation place or the application of the illumination device 1.

(Configuration of Light Guide Plate 2)

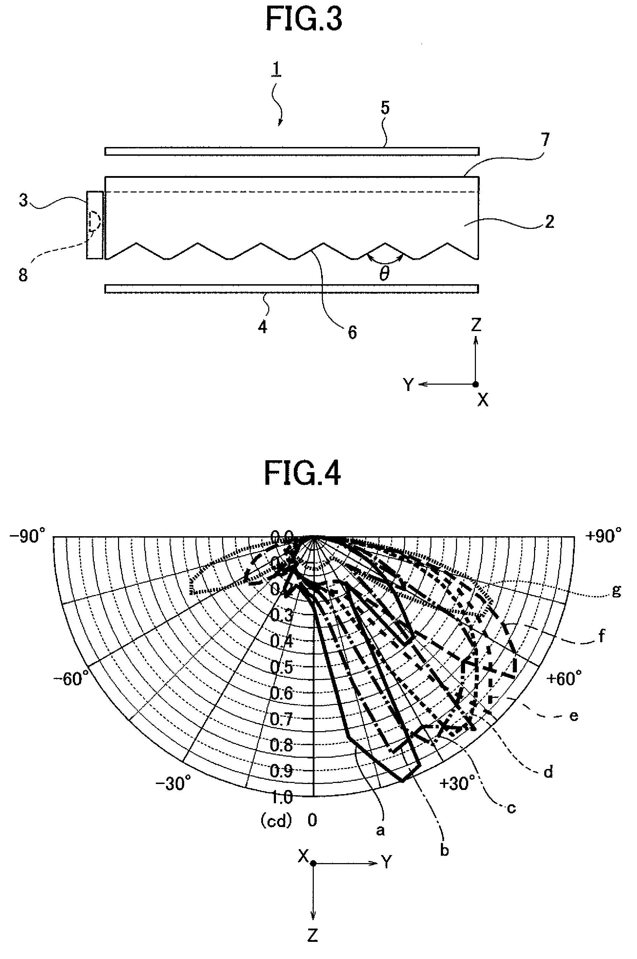

As illustrated in FIG. 1, the bottom surface 2b of the light guide plate 2 includes the recesses 6 provided at the predetermined pitch. Each recess 6 is provided to have a V-shape (V-groove-shape) in the cross-sectional view, and extends in the X-axis direction. As illustrated in FIG. 3, in the embodiment, the vertex angles ($\theta$) of the recesses 6 having the V-shaped in the cross-section are set in the range of 120 degree to 165 degree. Further, the height (the depth) of the recesses 6 are set in the range of about 0.001 to 0.1 mm and desirably in the range of 0.003 to 0.02 mm.

In the illumination device 1 illustrated in FIG. 1, most of the light emitted from the emission surface 2c of the light guide plate 2 among the light incident from the incident end surface 2a of the light guide plate 2 is the light entirely reflected by the inclined surface of the V-shaped recesses 6 provided on the bottom surface 2b of the light guide plate 2 and emitted at a predetermined emission angle (in the embodiment, an emission angle of about +25 degree to +65 degree while the front surface direction (the Z-axis direction) of the emission surface 2c of the light guide plate 2 is set as the emission angle of 0 degree as will be described later) with respect to the normal direction of the emission surface 2c.

Further, in the embodiment, the emission surface 2c of the light guide plate 2 includes the protrusions 7 provided at the prearranged pitch so as to have a lenticular lens shape in the cross-sectional view and to extend in the Y-axis direction. The protrusions 7 of the emission surface 2c have a function of causing the light emitted at a predetermined emission angle (in the embodiment, an emission angle of about +25 degree to +65 degree while the front surface direction (the Z-axis direction) of the emission surface 2c of the light guide plate 2 is set as the emission angle of 0 degree as will be described later) with respect to the normal direction of the emission surface 2c to be transmitted therethrough. Further, the light incident to the protrusions 7 at a different emission angle from the recesses 6 on the bottom surface 2b is entirely reflected by the protrusions 7, and the light is returned to the light guide plate 2.

As described above, it is possible to improve the luminous intensity of the light emitted from the emission surface 2c by providing the protrusions 7 having the lenticular lens shape in the cross-section on the emission surface 2c of the light guide plate 2.

Note that, although the protrusions 7 of the embodiment provided on the emission surface 2c of the light guide plate 2 have the lenticular lens shape in the cross-section, the protrusions 7 may have a trapezoid shape or a parabolic curve shape in the cross-section. Alternatively, the protrusions 7 may have a curve defined by the following Equation (1).
[Equation 1]

$$y = \frac{Cx^2}{1 + \sqrt{1 - (K+1)C^2x^2}} + Dx^4 + Ex^6 + Fx^8 + Gx^{10} \cdots\cdots + Mx^{20} \quad \cdots \ (1)$$

The Equation (1) is a general equation that does not limit the parameters C to M, and at least one of the parameters C to M is not 0. Particularly, K in Equation (1) is desirably -1.

FIG. 4 shows a measurement result of a luminous intensity distribution of the light emitted from the emission surface 2c of the light guide plate 2 when the aspect ratio of the protrusions 7, which have the lenticular lens shape and are provided on the emission surface 2c of the light guide plate 2 of the illumination device 1 illustrated in FIG. 1, is set to 20% and the vertex angle ($\theta$) of the V-shaped recesses 6 provided on the bottom surface 2b of the light guide plate 2 is changed (between 110 degree to 170 degree).

The aspect ratio is defined as r/2R (%) when the radius of the circle tracing the vertical section of the lenticular lens is indicated by R and the distance from the vertex of the circular-arc forming the lenticular lens to the string is indicated by r. Note that, in this measurement, the reflection sheet 4 of the illumination device 1 is located near the ceiling surface, and the diffusion sheet 5 of the emission surface 2c is removed therefrom.

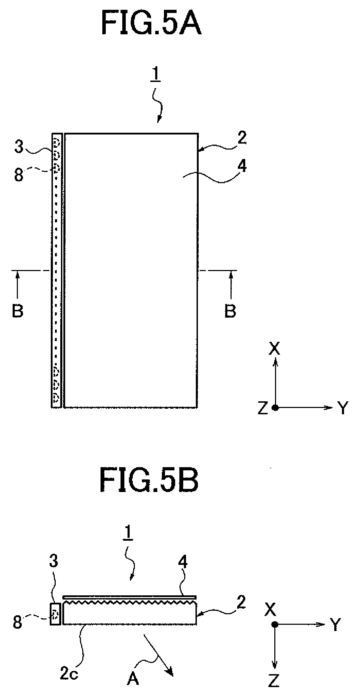

As illustrated in FIGs. 5A and 5B, the measurement result of the luminous intensity distribution shown in FIG. 4 is obtained when the front surface direction (the Z-axis direction) of the emission surface 2c of the light guide plate 2 is set as the emission angle of 0 degree, a position on the Z-Y plane opposite to the light emitting unit 3 in the Y-axis direction is set as +90 degree, and a position on the Z-Y plane near the light emitting unit 3 in the Y-axis direction is set as -90 degree. Note that, FIG. 5B is a cross-sectional view taken along the line B-B of FIG. 5A. In FIG. 5B, the direction indicated by the arrow A corresponds to the light emitting direction (the oblique downward direction opposite to the light emitting unit 3) from the emission surface 2c of the embodiment.

In FIG. 4, "a" shows the luminous intensity distribution when the vertex angle ($\theta$) of the recesses 6 is 110 degree, "b" shows the luminous intensity distribution when the vertex angle ($\theta$) of the recesses 6 is 120 degree, "c" shows the luminous intensity distribution when the vertex angle ($\theta$) of the recesses 6 is 130 degree, "d" shows the luminous intensity distribution when the vertex angle ($\theta$) of the recesses 6 is 140 degree, "e" shows the luminous intensity distribution when the vertex angle ($\theta$) of the recesses 6 is 150 degree, "f" shows the luminous intensity distribution when the vertex angle ($\theta$) of the recesses 6 is 160 degree, and "g" shows the luminous intensity distribution when the vertex angle ($\theta$) of the

recesses 6 is 170 degree. Here, the maximum luminous intensity value with the vertex angle ($\theta$) of the recesses 6 at 110 degree is defined as the standard value.

As clearly shown in the measurement result of FIG. 4, the anisotropic property of the emitting light is relatively small when the vertex angle ($\theta$) of the V-shaped recesses 6 provided on the bottom surface 2b of the light guide plate 2 is 110 degree ("a" in FIG. 4) since the light emitted from the emission surface 2c has maximum luminous intensity at the emission angle of +20 degree with respect to the Z-axis direction.

Further, when the vertex angle ($\theta$) of the V-shaped recesses 6 is 170 degree ("g" in FIG. 4), the maximum luminous intensity is obtained when the emission angle with respect to the Z-axis direction is about +65 degree to +70 degree. Accordingly, the anisotropic property of the emitting light is very high, but the maximum luminous intensity ratio of the light emitted from the emission surface 2c is low so as to be about 0.73. Further, a part of the light is also emitted to the incident end surface 2a of the emission surface 2c, so that the luminous intensity increases. In this way, since the anisotropic luminous intensity distribution is obtained in two directions with respect to the Z-axis direction, the luminous intensity in each direction decreases.

On the contrary, when the vertex angle ($\theta$) of the V-shaped recesses 6 is set between 120 degree to 160 degree ("b" to "f" in FIG. 4), the emission angle of the maximum luminous intensity with respect to the Z-axis direction is about +30 degree to +55 degree, and the maximum luminous intensity ratio of the light emitted from the emission surface 2c is about 0.92 to 0.97.

That is, since the vertex angle ($\theta$) of the V-shaped recesses 6 provided on the bottom surface 2b of the light guide plate 2 is set between 120 degree to 160 degree, it is possible to emit the light having an anisotropic luminous intensity distribution and high luminous intensity from the emission surface 2c (the protrusions 7).

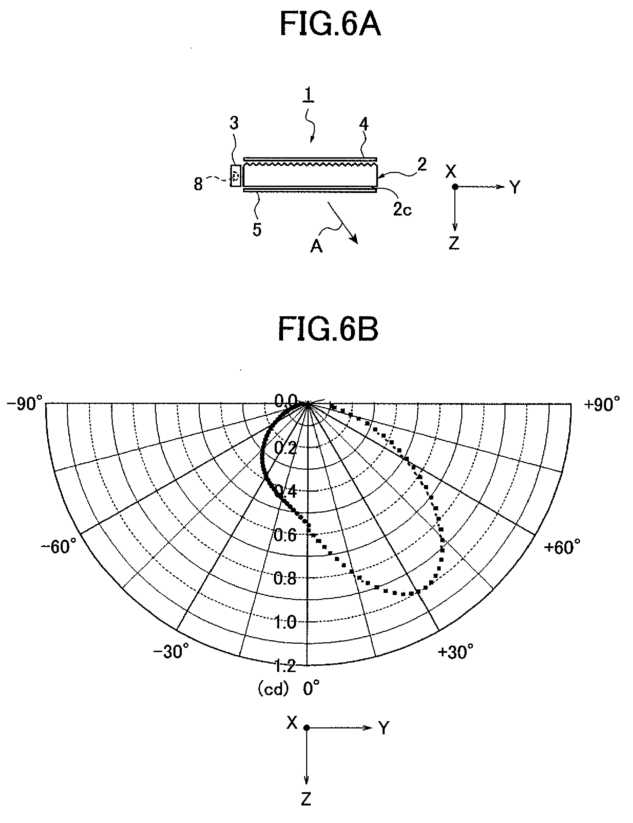

Then, the measurement result illustrated in FIG. 6B is obtained when the luminous intensity distribution of the light emitted from the emission surface 2c of the light guide plate 2 in a direction indicated by the arrow A (the oblique downward direction opposite to the light emitting unit 3) is measured in the illumination device 1 (see FIG. 1) of the embodiment in which the diffusion sheet 5 is disposed on the emission surface 2c of the light guide plate 2 as illustrated in FIG. 6A.

Note that, in the measurement of the luminous intensity distribution, the vertex angle ($\theta$) of the V-shaped recesses 6 provided on the bottom surface 2b of the light guide plate 2 is set to 130 degree, and the aspect ratio of the protrusions 7 having the lenticular lens shape and provided on the emission surface 2c of the light guide plate 2 is set to 20%.

In the measurement result of the luminous intensity distribution shown in FIG. 6B, the front surface direction (the Z-axis direction) of the emission surface 2c of the light guide plate 2 is set as the emission angle 0 degree, a position on the Z-Y plane opposite to the light emitting unit 3 in the Y-axis direction is set as +90 degree, and a position on the Z-Y plane near the light emitting unit 3 in the Y-axis direction is set as -90 degree, as illustrated in FIG. 6A.

As clearly shown in the measurement result of FIG. 6B, it is possible to smoothly adjust the range of the anisotropic luminous intensity distribution by diffusing the light emitted from the emission surface 2c with the diffusion sheet 5 disposed on the emission surface 2c of the light guide plate 2.

First Variation of Embodiment

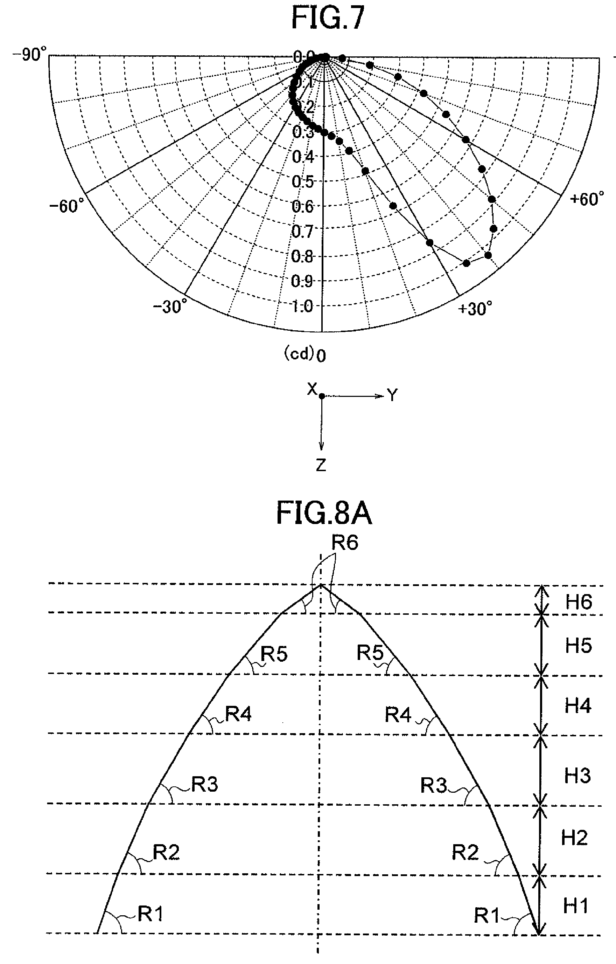

FIG. 7 shows a measurement result of a luminous intensity distribution when the protrusions 7 disposed on the emission surface 2c of the light guide plate 2 have a curved surface pattern in which the parameters of the equation 1 are defined in Table 1 and the recesses 6 provided on the bottom surface 2b of the light guide plate 2 have a multi-stage V-shaped grooves having a plurality of inclined surfaces with different inclination angles.

[Table 1]

|       | K | -1 |
|-------|---|----|
|       | C | 47.31523 |
| 4-th  | D | -29846 |
| 6-th  | E | 362207392 |
| 8-th  | F | -2276608932701 |
| 10-th | G | 8967392099183360 |
| 12-th | H | -22138674875790700000 |
| 14-th | I | $3.4149338436526 \times 10^{22}$ |

(continued)

| 16-th | J | $-3.18652196429692 \times 10^{25}$ |
|-------|---|------------------------------------|
| 18-th | L | $1.64310378517547 \times 10^{26}$ |
| 20-th | M | $-3.5868000886891 \times 10^{30}$ |

Similarly to FIG. 4, in the measurement result of the luminous intensity distribution of FIG. 7, the aspect ratio of the protrusions 7 having the lenticular lens shape and provided on the emission surface 2c of the light guide plate 2 is set to 20% for the illumination device 1 illustrated in FIG. 1; and the maximum luminous intensity with the vertex angle (θ) of the V-shaped recesses 6 provided on the bottom surface 2b of the light guide plate 2 is defined as the standard value.

As shown in FIG. 8A, the recesses 6 provided on the bottom surface 2b are multi-stage V-shaped grooves having six kinds of inclined surfaces in which an angle Ri formed between each inclined surface of the recesses 6 and the bottom surface 2b, and steps Hi ("i" indicates the stage number of the multi-stage V-shaped grooves) are set as shown in Table 2. Note that, although the recesses 6 of the first variation include a plurality of inclined surfaces having a single inclination angle, the recesses 6 may have a curved surface pattern connecting the vertexes with a smooth curve.

[Table 2]

| R6 | 17.5 | H6 | 1.94 |
|----|------|----|------|
| R5 | 19 | H5 | 2.10 |
| R4 | 20.5 | H4 | 2.26 |
| R3 | 22 | H3 | 2.42 |
| R2 | 23.5 | H2 | 2.56 |
| R1 | 25 | H1 | 2.72 |
| (unit:°) | | (unit:μm) | |

In the measurement result of the luminous intensity distribution, when nothing is placed on the emission surface 2c of the light guide plate 2, the maximum luminous intensity is obtained when the emission angle with respect to the Z-axis direction is about +40 degree, and the anisotropic property of the emitting light is very high.

When the anisotropic property is high as in this luminous intensity distribution pattern and the light guide plate 2 employing the luminous intensity distribution pattern is assembled in the illumination device so as to install the illumination device in a bottom of a merchandize display shelf in a department store or the like, the emission angle of the maximum luminous intensity becomes about +40 degree. As a result, a specific range near a merchandize disposed at the oblique lower side with respect to the front surface direction of the emission surface 2c of the light guide plate 2 can be intensively illuminated. Accordingly, the article can be illuminated to get attention over other articles.

Second Variation of Embodiment

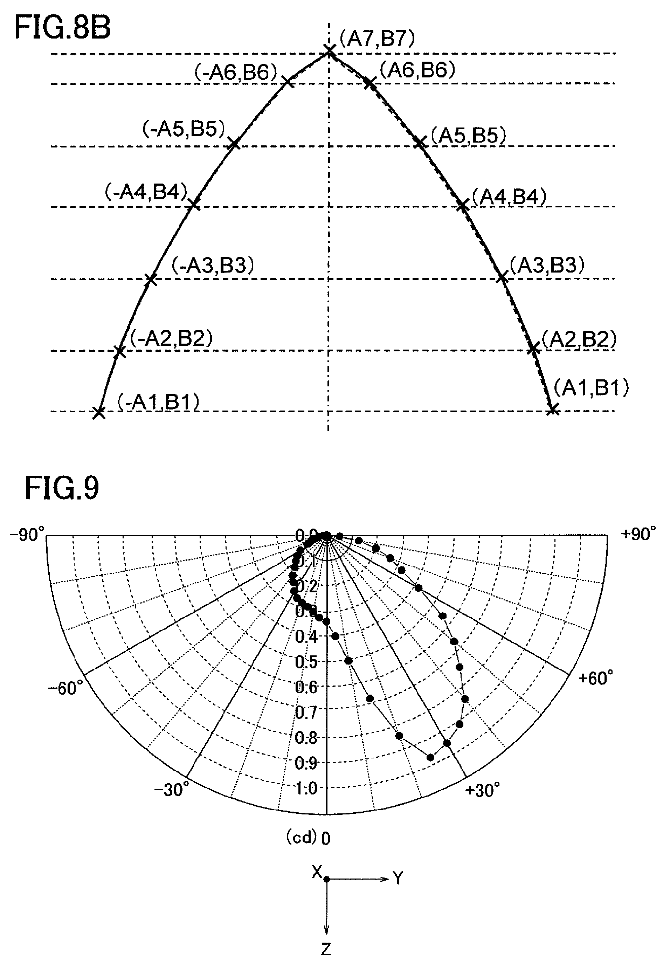

FIG. 9 shows a measurement result of a luminous intensity distribution when the protrusions 7 disposed on the emission surface 2c of the light guide plate 2 have a curved surface pattern in which the parameters of the equation 1 are defined in Table 1 and the recesses 6 provided on the bottom surface 2b of the light guide plate 2 have a substantially V-shaped curved surface pattern in which nodal points (Ai and Bi) of the recesses 6 smoothly pass through the points defined by Table 3 as in FIG. 8B. The measurement result of the luminous intensity distribution shown in FIG. 9 is also standardized in the same manner as FIGs. 4 and 7.

[Table 3]

| A7 | 0.00 | B7 | 7.00 |
|----|------|----|------|
| A6 | 2.40 | B6 | 5.93 |
| A5 | 4.79 | B5 | 4.82 |
| A4 | 7.15 | B4 | 3.66 |
| A3 | 9.50 | B3 | 2.47 |

(continued)

| A2 | 11.82 | B2 | 1.24 |
|----|-------|----|------|
| A1 | 14.14 | B1 | 0.00 |
| | | (unit:μm) | |

In the measurement result of the luminous intensity distribution shown in FIG. 9, when nothing is placed on the emission surface 2c of the light guide plate 2, the maximum luminous intensity is obtained when the emission angle with respect to the Z-axis direction is about +25 degree.

When the light guide plate 2 employing the luminous intensity distribution pattern is assembled in the illumination device and the illumination device is installed in a ceiling of an office or a dwelling house so as to be served as a wall surface light, the emission angle of the maximum luminous intensity is about +25 degree. As a result, the entire wall surface (from a boundary between the ceiling and the wall surface to a boundary between the wall surface and the floor surface) can be illuminated.

As described above, the anisotropic property of the light emitted from the emission surface 2c of the light guide plate 2 (or the diffusion sheet 5) can be changed by the combination of the protrusions 7 disposed on the emission surface 2c of the light guide plate 2 and the recesses 6 provided on the bottom surface 2b. Therefore, the light guide plate 2 should be selectively assembled in accordance with the application of the illumination device.

Further, since the illumination device 1 is of the edge light type in which the light emitting unit 3 is provided only in one side surface (the incident end surface 2a) of the light guide plate 2, the illumination device can be decreased in thickness and weight as a whole.

Cross-Reference to Related Application

This application claims priority to Japanese Patent Application No. 2013-100025 filed on May 10, 2013, the entire disclosures of which are incorporated herein by reference.

Reference Signs List

1: Illumination device
2: Light guide plate
2a: Incident end surface
2b: Bottom surface
2c: Emission surface
3: Light emitting unit
4: Reflection sheet
5: Diffusion sheet
6: Recess (recess pattern)
7: Protrusion (protrusion pattern)
8: LED (primary light source)

**Claims**

1. An illumination device of an edge light type, comprising:

    a primary light source provided at one side surface of a light guide plate, the light guide plate including an emission surface, a bottom surface facing the emission surface, and an incident end surface configured to receive light emitted from the primary light source,

    wherein

    the primary light source is disposed in parallel to an X-axis,
    the light guide plate is disposed in parallel to an X-Y plane,

the incident end surface of the light guide plate is aligned in parallel to a Y-Z plane,
the light guide plate includes a plurality of recess patterns provided on the bottom surface in parallel to the X-axis direction at a predetermined pitch and a plurality of protrusion patterns provided on the emission surface in parallel to the Y-axis direction at a prearranged pitch, and
each of the recess patterns is defined to reflect the light incident into the light guide plate through the incident end surface by an inclined surface on the recess patterns of the bottom surface such that emission light emitted from the emission surface has a maximum luminous intensity at an angle between 25 degree to 65 degree with respect to a Z-axis direction.

2. The illumination device according to claim 1, wherein each of the recess patterns provided on the bottom surface of the light guide plate has a V-shaped cross-section of which a vertex angle is set to 120 degree to 165 degree.

3. The illumination device according to claim 1 or 2, wherein each of the protrusion pattern provided on the emission surface of the light guide plate has a lenticular lens shape, a trapezoid shape, or a parabolic curve shape in a cross-sectional view.

4. The illumination device according to any one of claims 1 to 3, wherein
the bottom surface of the light guide plate includes a reflection sheet that is configured to reflect light, and
the emission surface of the light guide plate includes a diffusion sheet that is configured to uniformly diffuse light.

5. The illumination device according to any one of claims 1 to 3, wherein the bottom surface of the light guide plate includes a reflection sheet that is configured to reflect light.

# FIG.1

# FIG.2

# FIG.3

# FIG.4

# FIG.5A

# FIG.5B

# FIG.6A

# FIG.6B

# FIG.7

# FIG.8A

FIG.8B

FIG.9

<div align="center">

**INTERNATIONAL SEARCH REPORT**

</div>

| | International application No. |
|---|---|
| | PCT/JP2014/062467 |

**A. CLASSIFICATION OF SUBJECT MATTER**
*F21S2/00*(2006.01)i, *F21Y101/02*(2006.01)n

According to International Patent Classification (IPC) or to both national classification and IPC

**B. FIELDS SEARCHED**

Minimum documentation searched (classification system followed by classification symbols)
F21S2/00, F21Y101/02

Documentation searched other than minimum documentation to the extent that such documents are included in the fields searched
Jitsuyo Shinan Koho        1922–1996    Jitsuyo Shinan Toroku Koho    1996–2014
Kokai Jitsuyo Shinan Koho  1971–2014    Toroku Jitsuyo Shinan Koho    1994–2014

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2012-164421 A  (Kuraray Co., Ltd.), 30 August 2012 (30.08.2012), paragraphs [0051] to [0141]; fig. 1 to 5, 9 to 13 (Family: none) | 1-5 |
| Y | JP 8-17209 A  (Yasuhiro KOIKE, Enplas Corp., Hayashi Telempu Co., Ltd., Nitto Jushi Kogyo Kabushiki Kaisha), 19 January 1996 (19.01.1996), paragraphs [0055] to [0106]; fig. 6 (Family: none) | 1-5 |

☒ Further documents are listed in the continuation of Box C.        ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 27 June, 2014 (27.06.14) | 08 July, 2014 (08.07.14) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2014/062467

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2005-251720 A (Matsushita Electric Works, Ltd.), 15 September 2005 (15.09.2005), paragraphs [0028] to [0043]; fig. 1, 2 (Family: none) | 1-5 |
| Y | JP 2012-3883 A (Dainippon Printing Co., Ltd.), 05 January 2012 (05.01.2012), paragraph [0106]; fig. 9 (Family: none) | 1-5 |
| A | JP 2006-58839 A (Hong Fu Jin Precision Industry (Shenzhen) Co., Ltd., Tsinghua University), 02 March 2006 (02.03.2006), paragraphs [0019] to [0039]; fig. 7 to 9 & US 2006/0039670 A1 & US 2007/0041701 A1 & CN 1737660 A | 1-5 |
| A | JP 2011-259006 A (Stanley Electric Co., Ltd.), 22 December 2011 (22.12.2011), paragraphs [0017] to [0063]; fig. 1 to 9 (Family: none) | 1-5 |

Form PCT/ISA/210 (continuation of second sheet) (July 2009)

**EP 3 001 094 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H0381907 A
- JP 2013030279 A
- JP 2013100025 A